# EUROPEAN PATENT APPLICATION

(11) **EP 4 116 754 A1**
(43) Date of publication of application: **11.01.2023**
(21) Application number: 21382605.0
(22) Date of filing: 06.07.2021
(51) Int. Cl.: G02B 21/00, G01N 15/14, G02B 21/36

(54) **METHOD FOR OBTAINING A MICROSCOPIC DIGITAL IMAGE AND CORRESPONDING DEVICE**

(71) Applicant: Universitat de Barcelona, 08028 Barcelona (ES)
(72) Inventor: Dieguez Barrientos, Angel, 08293 Collbató (ES); Vila Arbones, Anna, 08293 Collbató (ES)
(74) Representative: Curell Suñol S.L.P.

(57) **Abstract**

Method for obtaining a microscopic digital image and corresponding device, using an observation zone (30), an emission module (10) and a detection module (20); the method comprises arranging a sample (31) in said observation zone (30) and repeating the steps:
- determining a plurality of target light emitters (12) of said emission module (10), each target light emitter (12) spaced away from the other target light emitters (12);
- determining a plurality of target light detectors (22) of said detection module (20);
- activating said target light emitters (12) and reading said target light detectors (22); and
- determining a plurality of target pixels of said digital image and obtaining each of said target pixels from said reading of said target light detectors (22);
until all the image pixels of said digital image are obtained, thus obtaining said microscopic digital image of said sample (31).

## Description

### Field of the invention

The invention lies in the field of microscopic digital images, in particular by using miniaturized microscopic devices that do not rely on optical components for the magnification of the sample.

In particular, the invention relates to a method for obtaining a microscopic digital image comprising a plurality of pixels, wherein said method makes use of:
- an observation zone, configured for receiving a sample;
- an emission module, comprising a plurality of light emitters arranged to emit light towards said observation zone; and
- a detection module, comprising a plurality of light detectors arranged to receive light from said observation zone.

The invention also relates to a corresponding device for obtaining microscopic digital images that executes the aforementioned method.

### Prior art

In the context of this document, the term array refers to a group of elements regularly arranged. The most common example is a bidimensional (2D) array of elements, for example, a photographic camera sensor or LED display.

In the field of microscopy, it is known to obtain images taken from devices that do not rely on magnification optics and that comprise a light emission module, generally a rectangular 2D matrix of light emitters, and a detection module, such as a camera sensor having a 2D matrix of light detectors also commonly referred photodetectors. Both emission and detection modules are arranged opposite and very close to each other. When a sample is arranged in between them both, it is possible to obtain images by activating, sequentially, one light emitter and the detector that is directly opposite, or at least the one that is closer to the emitter in the case that they are not exactly aligned. In this type of arrangement, the sample interferes the light coming from each emitter and cast a shadow over the detection module.

Therefore, it is necessary to operate sequentially emitter by emitter because each light emitter emits a beam of light that tends to form a solid angle towards the detection module, so that the area illuminated by each light emitter in the detection module may expand to more than one light detector, causing interference. Besides, diffraction effects are also produced by the presence of the sample.

Microscopic devices of this type are extremely compact and may have a low manufacturing cost, because it is not necessary to use optical components or even align them in order to magnify the image of the sample and then transmit said image to a camera sensor.

Nevertheless, the image acquisition process is slow and may not be suitable for some samples, in particular if said samples are moving.

Is therefore needed a method and device for reducing the image acquisition time.

### Summary of the invention

The invention is aimed to provide a method for obtaining a microscopic digital image of the type stated at the beginning, being able to avoid the problems that have been identified above.

In the context of this document, the emission module may be a monolithic component, or a group of components, by the way of a non-limiting example, a single display, or an arrangement of displays, both options being equivalent. The same applies in the case of the detection module. Components may be arranged independently or even being stitched together.

Those skilled in the art will understand that when referring to light emitters and light detectors, using groups elements instead of individual elements renders to the equivalent effects and results to the ones described herein, therefore, for the sake of clarity and brevity, and unless otherwise specified, it has to be understood that in the description that option is equivalent. By the way of a non-limiting example, using a group of neighbour LEDs instead of a single LED for emission can be advantageous for providing more light radiation. Likewise, using a group of neighbour photodetectors instead of a single photodetector for detection can be advantageous for having more sensibility and/or for increasing the signal to noise ratio, SNR, at the cost of decreasing the resolution of the obtained image.

In this context, the emission/detection modules are considered those that are effectively used, even if the physical components are larger or include other elements that are not used in order to form the image.

This purpose is achieved by a method of the type indicated at the beginning, characterized in that the method comprises arranging said sample in said observation zone and repeating the following steps:
a) determining a plurality of target light emitters among said light emitters of said emission module, each target light emitter spaced away from the other target light emitters;
b) determining a plurality of target light detectors among said plurality of light detectors of said detection module;
c) activating said target light emitters and reading said target light detectors; and
d) determining a plurality of target pixels among said pixels of said digital image and obtaining each of said target pixels from said reading of said target light detectors;
wherein an iteration of the method comprises said steps a) to d), so that after a plurality of iterations all the image pixels of said digital image are obtained, thus obtaining said microscopic digital image of said sample.

It to be understood that steps a) and b) are not necessarily meant to be performed one after the other, for example, for the objective of the invention it may be equivalent to first determine the target light emitters and then the target light detectors. The same applies for determining the target pixels in step d).

Therefore, in each iteration of the method, several target light emitters are activated at the same time, and several target light detectors are read. Target light emitters are determined so that they are spaced away, in this way, the interference of light coming from different light emitters is minimized. Using the readings of said target light detectors, several target pixels are obtained. The iterations are repeated until all the pixels are read and the image is thereby obtained. In the context of this document, the term "reading" referring to a light detector has to be understood in its generic form, since the nature of the reading depends on the type of detector used. The most common detectors provide readings that are related to the intensity of the incident light received by said detector. Likewise, the way the readings from the target light detectors are used for obtaining the target pixels may be different depending on the nature of the light detectors and the image that is read. As a non-limiting example, each single target light detector may contain light intensity information that is digitalized in a greyscale pixel value scaling from 0 (black) to 255 (white) and used for a single target pixel that corresponds to said target light detector. In another example, each light detector comprises three elements, each configured to measure the intensity of light in three components, R (red), G (green) and B (blue), also known as trichromacy. In this case, the reading could be considered a trio of values, one for each colour R, G or B, and each digitalized into a respective 0-255 scale. In this case, the obtained pixels might have colour information. Other types of reading may also be envisaged, for example, but not limited to, luminance, light polarization, wavelength, colour saturation, or combinations thereof. In some embodiments, for example, having the detectors that are SPADs (Single Photon Avalanche Diodes), the reading may be related to the total number of photos received during predefined time intervals. The output digital image is thus formed by the readings of each light detector.

The emission module and detection module do not necessarily have the same number of elements and arranged equally. Moreover, the number of target light emitters do not need to match the number of target light detectors. Some exemplary and non-limiting examples are given hereinafter. In a first example, each light emitter corresponds to one light detector and to one pixel, and said correspondence is one to one, so that a specific light detector corresponds only to one light emitter and to one pixel. That correspondence means that, if in an iteration of the method, a target light emitter is activated, then the corresponding target light detector is read, and the reading is used for the corresponding target pixel. In a second example, the correspondence is one to one between the light emitters and the pixels, but each particular light detector is associated to a group of light emitters and, therefore, to a group of pixels. In this second example, each pixel corresponds to a light emitter, but its pixel value is obtained from the reading of a light detector that is common for a group of light emitters, and, therefore, common for a group of pixels. The reading may be nevertheless different for the pixels of the group since the light path is different for each light emitter. In a third example, the number of light emitters is less than the number of light detectors and, each light emitter corresponds to a group of light receivers. In this case, in a particular iteration of the method, for each target light emitter that is activated, several light detectors are read, and the reading is used for obtaining a corresponding pixel or pixels.

The method described herein has the advantageous technical effect that the time necessary for image acquiring the image is decreased and, at the same time, because the target light detectors are spaced away, the interference coming from the target light regions corresponding of the other pixels may be kept under control or even be negligible.

This is of particular importance with samples that move by themselves or due to the environment: if the movement is fast enough it could be impossible to obtain a correct image from said sample. This effect severely reduces the field of action where this kind of microscopy devices can be used.

In a preferred embodiment, in each iteration all the light detectors of the detection module are read but only the readings from the target light detectors that have been determined in step b) are used. This is particularly advantageous for the cases where the detection module is a camera sensor or the like, capable to acquire a complete reading in very short time intervals. In a preferred embodiment, the light detection module is a camera sensor. In another alternative embodiment, each light detector comprises at least one Single Photon Avalanche Diode, SPAD.

In a preferred embodiment, instead of a single light detector, the method uses groups of light detectors acting as one single light detector. In this case, the resolution may be decreased but the sensitivity and/or the SNR (Signal to Noise Ratio) can be increased for the obtained image.

Preferably, said sample is arranged near to said emission module, in particular closer to the emission module than to the detection module and more preferably in contact with the emission module. A transparent cover for the emission module may also be envisaged, for example, a sample holder made of glass or a transparent polymer. In this case, the sample may be in contact with said transparent cover. In the lenseless microscopy solutions known in the art, the sample is arranged near the detection module in order to obtain a large field of view while trying to avoid diffraction. The invention described herein overcomes this technical prejudice allowing to arrange the sample near to the emission module. Indeed, it has been observed that diffraction effects may even be less severe when the sample is arranged near the emission module, the edges are often crisper and have better definition than in the case where the sample is close to the detection module. Moreover, there is a magnification effect that also leads to an increased resolution of small details. This magnification depends on the distance between the emission module and the detection module. The corresponding reduction in the field of view may be compensated by using larger emission modules.

Preferably, said reading a target light detector further includes averaging with neighbouring light detectors, even if the value that is read is associated to a single target light detector, the reading may take into account the measures of neighbouring light detectors in order to improve said reading. Different averaging methods known in the art may be envisaged. Therefore, achieving a higher sensitivity and/or SNR while maintaining an obtained image of high resolution.

In a preferred embodiment, said detection module is arranged to receive light from said observation zone that has been reflected by said sample, so that the digital image is formed by the light reflected from the sample which is particularly useful for samples that are not transparent, for example, minerals.

Preferably, said detection module is arranged under said emission module or beside said emission module, wherein said observation zone is arranged over said emission module, so that the image is formed by the light reflected by the sample and the observation zone may be simply arranged over a surface containing the emission and detection modules underneath. This facilitates the construction and the arrangement of the sample in observation zone, further resulting in a compact design. In the case that the detection module is arranged under the emission module, the latter may be transparent or having a transparent grid where the light coming from the sample can pass through.

In an alternative embodiment, said observation zone is arranged between said emission module and said detection module, so that the detection module receives the transmitted light that passes from the emission module and through the observation zone. This embodiment is particularly advantageous in the cases where the sample is of a kind that light can pass through and reveal internal details, for example, biologic samples containing cells.

In a preferred embodiment:
- said emission module comprises a plurality of emission zones, each emission zone comprising a plurality of light emitters; and
- said detection module comprises a plurality of detection zones, each detection zone comprising at least one light detector,
- said digital image comprises a plurality of image zones; each image zone comprising a plurality of pixels;
each of said emission zones corresponding one-to-one to one of said detection zones and one of said image zones, so that the number of emission zones is the same that the number of detection zones and that the number of image zones;
wherein, for each iteration of the method:
- said plurality of target light emitters is determined as comprising one light emitter of each of said emission zones; and
- said plurality of target light detectors is determined as comprising at least one light detector of each of said detection zones corresponding to each of said emission zones.

Those skilled in the art will understand that the division in zones of the emission module and the detection module is not necessarily a physical division, and it may be an effective division for the means of the method disclosed herein. Each of the emission zones corresponds, that is, is associated, with one of the detection zones and one of the image zones, so that the pixels of each image zone are obtained by readings of light detectors of the corresponding detection zone, which are illuminated by light emitters of the corresponding emission zone. This correspondence of zones is univocally determined one-to-one, so that each emission zone is associated only to one detection zone, and each detection zone is associated only to said emission zone. The same applies to the image zones, so that there is a one-to-one relation between zones.

In this embodiment the correspondence is by zones, not necessarily by light emitters, light detectors, and pixels. Therefore, it is not necessary that the number of elements in one emission zone is the same that the number of elements of the detection zone or the image zone. In each iteration, a single light emitter of each emission zone is determined as target light emitter and activated, and at least one light detector of each detection is determined as target light detector. Moreover, unless otherwise specified, the light detectors and light emitters referred in the different embodiments of the method refer to those that are effectively used by the method, as a non-limiting example, the emission module may comprise a large number of light emitters, but only one in every 10 is used. Equivalent examples may be envisaged for the detection module.

This embodiment has the advantage that, compared to the pixel-by-pixel acquisition of the art, the time for obtaining the digital image is reduced by a factor that is the number of emission zones. Preferably all the emission zones have the same number of light emitters, so that the number of iterations of the method can be determined as the number of light emitters of each zone. This strategy further simplifies the determination elements in each step of the method.

Preferably, each of said emission zones comprises a plurality of light emitters; and each of said detection zones comprises one light detector; and, for each iteration of the method:
- said plurality of target light detectors is determined as comprising the light detector of each of said detection zones; and
- said plurality of target pixels comprises one pixel of each of said image zones; so that each of said target pixels corresponds to one of said image zones and, thus, to one of said emission zones and one of said detection zones;
wherein each pixel of said image corresponds one-to-one to one of said light emitters, so that each target pixel is determined as the pixel corresponding to the target light emitter of the corresponding emission zone and obtained by reading the corresponding target light detector of the corresponding detection zone.

Therefore, each detection zone has only one light detector, nevertheless, those skilled in the art will understand that using a group of detectors elements acting as a single light detector, for example, averaging their values to obtain a single reading, is an equivalent solution that may also be envisaged. The advantageous embodiment only uses a light detector per zone, so that, in different iterations, the light detector of a zone receives the light corresponding to different light emitters of the corresponding emission zone, thus "reusing" the same light detector for all the light emitters of the corresponding emission zone, which is read into different pixels. This minimizes the cost of the detection module and is particularly advantageous in the case where the type of light detectors is expensive and/or bulky. The one-to-one correspondence between the light emitters and the pixels means that the digital image will have as many pixels as the light emitters that have been effectively used in the method.

In an alternative embodiment, each of said emission zones comprises a plurality of light emitters, and each of said detection zones comprises a plurality of light detectors; wherein each light emitter corresponds one-to-one to one light detector and one pixel, so that the number of light emitters is the same that the number of light detectors and that the number of pixels. Wherein, for each iteration of the method:
- said plurality of target light detectors is determined as comprising the light detectors corresponding to said target light emitters; and
- said plurality of target pixels is determined as comprising the pixels corresponding to said plurality of target light emitters and said plurality of target light detectors and each target pixel is obtained by reading the corresponding target light detectors.

Therefore, for this embodiment there is a one-to-one correspondence between emitters, detectors, and pixels that have been effectively used. Notice that, as in other examples, it is possible that the emission module and/or the detection module have more elements that the ones effectively used by the method, for example, if only the central part of the detection module is used. This one-to-one correspondence leads to a digital image having an optimized resolution and minimizing undesired effects like light fall-off. This effect is improved in the case of parallel emission and detection modules where each light emitter is aligned with a light detector.

In an alternative embodiment:
- each of said emission zones comprises a plurality of light emitters;
- each of said detection zones comprises a plurality of light detectors; and
- each of said pixels of said image corresponds one-to-one to one of said light detectors, so that the number of pixels is the same that the number of light detectors;
wherein, for each iteration of the method:
- said plurality of target light detectors is determined as comprising a plurality of light detectors of each of said detection zones; and
- said plurality of target pixels is determined as comprising the pixels corresponding to said plurality of target light detectors and each target pixel is obtained by reading the corresponding target light detector.

Therefore, the pixels are associated one-to-one to the light detectors, so that each pixel is obtained by the reading of the corresponding light detector. In this case, in one particular iteration, one light emitter is activated for each emission zone, but several light detectors are read and the reading of each one is used for obtaining the corresponding pixels. Therefore, for each detection zone, a sub-image is obtained in each iteration. This has several advantages, the more noticeable is that the time required for obtaining a complete digital image is greatly reduced since pixels are not obtained one by one for each image zone, but by groups. It further reduces the number of light emitters necessary for the method. As in previous cases, the method refers to light emitters that are effectively used, even if the emission module has more elements, for example, if there is a great density of light emitters in the emission module but only one in N is used for the method.

Preferably, each target pixel is obtained by further compensating the light fall-off received by the corresponding target detector. For the sake of brevity, the explanation described hereinafter corresponds to the situation where the readings of the light detectors relate to the intensity of the received light and where the digital image is a colour or grayscale image obtained by said readings. Those skilled in the art will have no problems using the same concepts for other similar cases. The light fall-off, sometimes referred as "vignetting", is due to the fact that the light detectors that are closer to the target light emitters receive more intensity of light that the ones in the extremes, because the light has travelled a longer path in the second case. This explanation corresponds to the situation where no sample is arranged in the observation zone. If the emission profile of each light emitter is well known, for example, by a pre-characterization or by means of measures in absence of samples, the readings of the light emitters can be corrected in order to compensate this effect, therefore obtaining a digital image that does not contain unwanted variations of luminance.

Preferably:
- said emission module is a rectangular array of MxN light emitters, so that said emission module comprises M light emitters in a first dimension and N light emitters in a second dimension;
- each of said emission zones is a rectangular group of mxn light emitters, M being multiple of m and N being multiple of n; and
- thus, having PxQ emission zones, being M=m·P and N=n·Q;
wherein, for each of said emission zones:
- for the first iteration of the method said target light emitter corresponding to said emission zone is determined as one corner light emitter of said emission zone; and
- for any consecutive iteration of the method, said target light emitter corresponding to said emission zone is a light emitter of said emission zone which is a neighbour of the target light emitter determined in the previous iteration of the method; preferably, following a zig-zag pattern between iterations.

As is customary in the art, when referring to rectangular arrays the first dimension is often referred as "horizontal" and the second dimension as "vertical", even if the module can be arranged in any position depending on the application. The term "corner light emitter" refers to the light emitter that is located in one of the corners of the emission zone, since each emission zones is a rectangular array of mxn elements, using a common identification of coordinates (1..m, 1..n), a corner light emitter is identified by coordinates (1, 1), (1, m), (m, 1) or (m, m) of the emission zone where said ling emitter is located.

This particular distribution of elements may be used for several embodiments, for example, but not limited to, the ones described above. Therefore, the emission module is divided in PxQ emission zones, each having mxn light emitters. In the method, the light emitters of each zone are "scanned" one by one in consecutive iterations, preferably following a zigzag, until all the light emitters of the zone have been activated, one in each iteration. Since all the emission zones have the same number of elements and that scanning is done for all zones, the method finalizes in mxn iterations. This option facilitates the determination of the target light emitters and it grants that all the light emitters that will be effectively used by the method are activated. At the same time, the distance between neighbour target light detectors is known and normally constant. This last effect is relevant for granting that during the method there is not an increased risk of interference from the light coming from neighbouring target light emitters for some iterations. Consecutive scanning has the further advantage of facilitating a pre-defined activation that can be even stored in-chip by means of electronical components.

The invention also refers to a device for obtaining microscopic digital images, comprising:
- an observation zone configured for receiving a sample;
- an emission module, comprising a plurality of light emitters arranged to emit light towards said observation zone;
- a detection module, comprising a plurality of light detectors arranged to receive light from said observation zone; and
- a control means, configured for driving the device to execute the method for obtaining a microscopic digital image according to the method described above.

Preferably, each light emitter of said light emission module comprises at least one light emitting element, preferably a LED, which are power efficient and can be easily integrated in arrays. Therefore, some preferred embodiments can be envisaged for the emission module, by the way of non-limiting examples, a micro-display of LEDs or a 2D matrix of nano-LEDS, with LEDs that may be even smaller than the wavelength of the light that is emitted.

Preferably, each of said plurality of light detectors is comprises at least one photodetector, preferably a Single Photon Avalanche Diode. In an alternative embodiment, said detection module is a camera sensor.

Preferably, light concentration means are arranged on top of each of said light detectors for concentrating an incident light towards each respective light detector, therefore improving the sensitivity of the device. In a preferred embodiment, said light concentration means are preferably micro-lenses, which are easily arranged over several types of light detection modules.

In a preferred embodiment, said control means is software-driven, so that it can execute the method by following a set of instructions, being already pre-stored in the device or by means of an external interface, therefore expanding the range of functionalities of the device and, in particular, the particular options that in which the method can be executed for obtaining digital images, thereby improving the flexibility of the device.

In an alternative embodiment, said control means comprise a static predefined sequence stored in-chip, therefore minimizing the time required for each iteration of the method. Therefore, the device follows a predefined sequence for determining the target light emitters.

Preferably the predefined sequence of target light emitters is controlled by means of shift registers between the plurality of target light emitters of consecutive iterations of the method for obtaining a microscopic digital image, so that each of the target light emitters in an iteration is activated sequentially from each of the target light emitters in the previous iteration. Target shift registers or equivalent circuit components may therefore be used, interconnecting the light emitters in the desired sequence. This implementation greatly improves the speed by reducing the time required for each iteration. For example, using a standard microdisplay as an emission module requires that the light emitters to be activated for a particular iteration are "loaded" in the microdisplay controller, similar as when an image is loaded in a computer display. In this advantageous embodiment, instead of the aforementioned step of loading a complete block of information containing an "image" for each iteration, the device may initialize a first plurality of target light emitters in the first iteration and then, all the interconnected light emitters are activated in sequence, potentially with a single digital clock signal.

This procedure is not generally required for the detection module because in the market there are image sensors capable of very fast image acquisition. Nevertheless, the same concept may also be envisaged for the detection module, so that the target light detectors of each iteration are determined by a predefined sequence stored in-chip and preferably by means of shift registers or equivalent circuit elements. This alternative embodiment is advantageous in regards of the cost of the resulting device. Moreover, if the emission module and detection module are both equivalent in number of pixels and the arrangement of said pixels, it is possible to synchronize both components with the same digital signal, thereby avoiding desynchronization issues. The resulting device has an improved speed for obtaining digital images of the sample.

Preferably, said emission module comprises a plurality of emission zones, each emission zone comprising a plurality of light emitters, and said control means comprise a shift register for each of said emission zones configured to sequentially activate each of the light emitters of said emission zone. Therefore, in the case of dividing the emission module in emission zone, a different shift register (or an equivalent component) is used for each of the emission zones.

Preferably, the device further comprises:
- a transporting tape, preferably having a self-adherent side, arranged through said observation zone; and configured for adhering said sample thereto; and
- dragging means, configured for dragging said transporting tape though said observation zone, so that said sample adhered thereto is dragged to said observation zone;
wherein said dragging means preferably comprise a roller.

Therefore, the sample is arranged in said observation zone by adhering said sample in the transporting tape and dragged by the tape to the observation zone. It will be evident for those skilled in the art that the transporting tape must be transparent to the type of light emitted by the emission module. This constitutes a convenient and simplified way of arranging the sample to form the image that could otherwise be difficult to arrange given the reduced dimensions of the elements.

In alternative embodiment, the device further comprises suction means, configured for driving said sample to said observation zone by suction, so that the sample is arranged in said observation zone by suction.

Preferably, said observation zone has a volume of a size that allows said sample to freely enter said observation zone. Therefore, it is possible to deploy the device in a place where a sample is present and said sample to be moved to the observation zone, for example, because the sample itself moves or due to environmental effects such air or water streams where the device has been deployed.

Preferably, said detection module is arranged in parallel opposite to said emission module and said observation zone is arranged between said emission module and said detection module; wherein, in said step (e) said corresponding plurality of target light emitters of said emission module, is determined so that each target light emitter is opposite and centred regarding a corresponding target light detector.

Preferably, said device comprises a first plate and a second plate, attached to one another and forming through channel; wherein one of said emission module and said detection module is provided in said first plate and the other of said emission module and said detection module is provided in said second plate, so that said observation zone is located in said through channel. Preferably, at least one of said plates comprises an outer plate and a frame plate, attached to one another, wherein said frame plate comprises a hole for receiving said emission module or say detection module, and a transparent cover between said array and said through channel. These particular embodiments render a device that can be easily manufactured and assembled, and at the same time, have a reduced volume, which is advantageous for storage, handling, and deployment of the device.

The invention also relates to the use of at least one device as disclosed herein for obtaining distributed digital images, wherein said at least one device is deployed in a zone containing samples, and each of said at least one device performs at least one execution of said method for obtaining images, therefore obtaining a plurality of images of samples corresponding to said zone. The devices disclosed in this document have the advantage of being small and having a low production cost, as well as a fast image acquisition. This combination of features renders them particularly well suited to be deployed in a zone, for example an environment area like a pool, a river etc., and used for obtaining microscopic images of the samples that are present in said zone. The devices themselves may be provided with motion means, configured for moving the device in the area, and/or being passive, so that the sample is moved towards the device, for example, due to environmental effects like a water or air stream. This use method is advantageous, for example, in order to monitor the presence and type of microorganisms in said zone.

It is, therefore, not necessary to take the sample to the microscope as in the known state of the art, instead the microscope is moved to where the sample is.

The resulting plurality of images may be then recovered by recovering the devices and reading their memory files, or alternatively receiving them by wired or wireless means from the devices.

The invention also includes other detail features illustrated in the detailed description of some embodiments of the invention and in the accompanying figures.

### Brief description of the figures

Further advantages and features of the invention will become apparent from the following description, in which, without any limiting character, preferred embodiments of the invention are disclosed, in reference to the accompanying figures:
Fig. 1 is a schematic perspective view of an emission module and a detection module in a device for obtaining microscopic digital images, wherein the density of light detectors is higher than the density of light emitters.
Fig. 2 is a schematic lateral view of an emission module and a detection module used in another device for obtaining microscopic digital images, wherein the density of light detectors is lower than the density of light emitters.
Fig. 3 is an exploded view of an exemplary embodiment of a device for obtaining microscopic digital images according to the invention.
Fig. 4 is a schematic diagram showing the interference of the beams of light between light emitters depending on the distance to the sample.
Fig. 5A is a schematic diagram of the magnification effect when the sample is near the detector module.
Fig. 5B is a schematic diagram of the magnification effect when the sample is near the emission module.
Fig. 6A, 6B and 6C are schematic representations of the target light emitters of the emission module that are activated in different iterations of a method for obtaining a microscopic digital image according to one embodiment of the invention. In this example, the emission module is parallel and facing towards the detection module, so that corresponding elements follow a specular distribution between both modules.
Fig. 7A, 7B and 7C are schematic representations of the target light emitters and target light detectors used in different iterations of a method for obtaining a microscopic digital image according to one embodiment of the invention.
Fig. 8A, 8B and 8C are schematic representations of the target light emitters and target light detectors used in different iterations of a method for obtaining a microscopic digital image according to another embodiment of the invention where each detector zone has only one light detector.
Fig. 9A and 9B are schematic representations of the target light emitters and target light detectors used in different iterations of a method for obtaining a microscopic digital image according to another embodiment of the invention where a several target light detectors are read for each detection zone in each iteration.
Fig. 10 shows an example of a powering circuit for a LED used in a micro-display according to the state of the art.
Fig. 11 shows an example of a simplified powering circuit for a LED that can be used with the device of the invention.
Fig. 12 shows a schematic circuit representation of an embodiment of the control means arranged for sequential activation of the target light emitters using a shift register based on flip-flop elements.

### Detailed description of embodiments o the invention

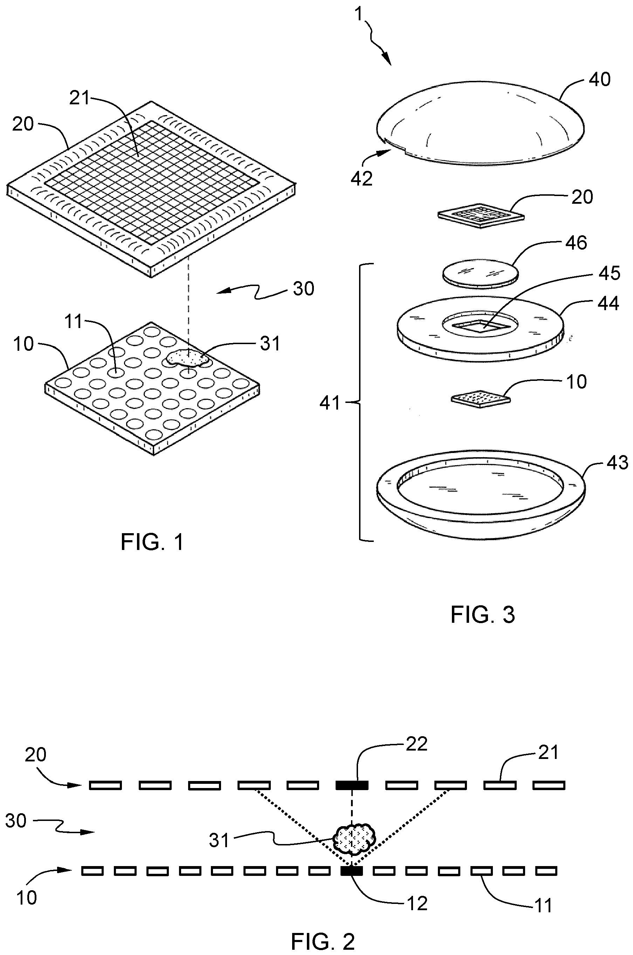

Fig. 1 and Fig. 2 are simplified representations of the main components of devices for obtaining microscopic digital images that are known in the art except for the position of the sample 31. Both are only abstract representations of the elements that have been simplified for the sake of clarity, for example, they are not at scale, the distances between elements have been exaggerated, and only a few elements are shown.

Both figures show an emission module 10 and a detection module 20, and an observation zone 30 that is configured for receiving a sample 31, in the exemplary figures, the observation zone 30 is located between the emission module 10 and the detection module 20 that are arranged in parallel and facing each other. The emission module 10 has a plurality of light emitters 11 that are arranged to emit light towards the observation zone 30, and the detection module 20 has a plurality of light detectors 21 that are arranged to receive light from said observation zone 30. Fig.1 is an example wherein the density of light detectors is higher than the density of light emitters, and Fig.2 shows the opposite situation, wherein the density of light detectors is lower than the density of light emitters. In Fig. 1, in order to show the light detectors 21, the detection module 20 has been represented as transparent, so that the light detectors 21 can also be seen from above. Nevertheless, said light detectors 21 are in fact arranged in the lower side of the detection module 20, opposite the emission module 10.

For the sake of clarity, the size of the observation zone 30 has been exaggerated in the figures. Likewise, the sample 31 is represented as a small spot. For the sake of clarity in the figures, the sample 31 has been arranged near the emission module 10 but, in fact, in the art it is normally arranged near the detection module 20. In these examples known in the art, in order to form the complete digital image, target light detectors 22 are read one by one, illuminated by the light coming from a corresponding target light emitter 12, that is the one most centred regarding said target light detector 22. The dashed vertical lines in Fig.1 and Fig. 2 represent the path that joins a particular target light emitter 12 with its corresponding target light detector 21. The dotted diagonal lines in Fig.2 represent the cone of light emitted by a light emitter 12, which is a simplification of the solid angle of the beam of light.

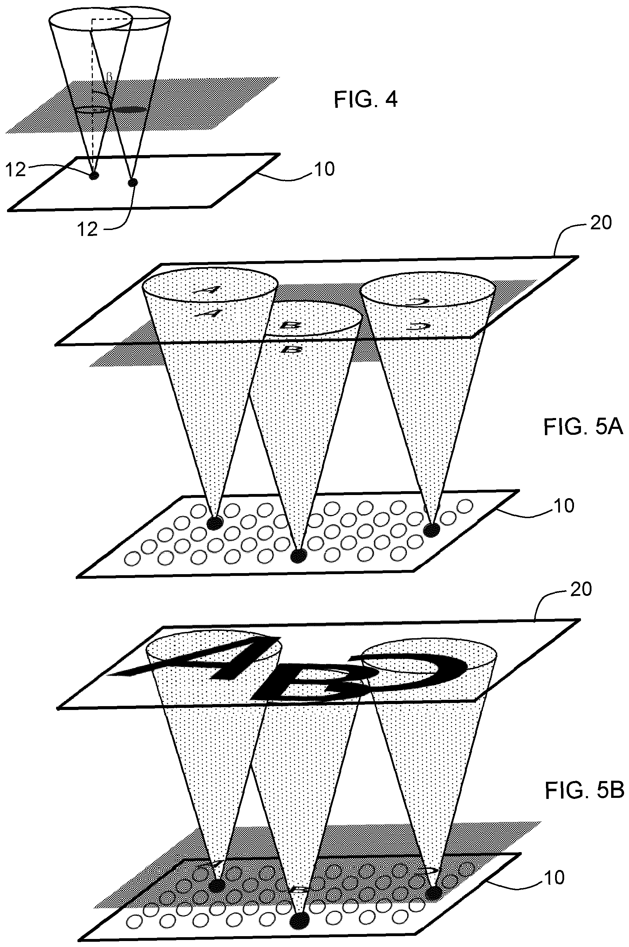

Fig. 4 is a simplified diagram showing the interference of light coming between neighbouring target light emitters 12. It will be clear for the skilled person how to determine the distance between light emitters depending on the angle of the beam and the distance to the sample 31 and/or to the detection module 20.

Fig. 5A and Fig. 5B are simplified diagrams of the magnification effect of arranging the sample 31 near to the detection module, as in Fig. 5A, or near the emission module, as in Fig. 5B. Letters A, B and C have been used as a reference, but the figure is only a qualitative diagram, and it is not at scale.

Fig. 3 shows a first exemplary embodiment of a device 1 for obtaining microscopic digital images according to the invention. The device 1 has an emission module 10, having a plurality of light emitters 11, and a detection module 20 having a plurality of light detectors 21, as well as an observation zone 30 configured for receiving a sample 31. The light emitters are arranged to emit light towards the observation zone 30 and the light detectors are arranged to receive light from the observation zone 30. In this first embodiment, these elements are arranged in the same way that the ones in Fig. 1 and Fig. 2, i.e., the observation zone 30 is arranged in between and the emission and detection modules are arranged in parallel and facing to each other.

In the embodiment, each light emitter 11 is a LED and each light detector 21 is a photodiode, but other embodiments can be envisaged where each light emitter 11 and/or each light detector 21 is a plurality of elements. In the first embodiment, the emission module 10 and the detection module 20 are both bidimensional and have the same distribution of elements, in particular, each light emitter 11 is facing a light detector 21. Other embodiments can be envisaged where both arrays have different distribution of elements, this particular embodiment has been chosen for the sake of clarity regarding the device 1 of the invention and the evolution of the steps of the method for obtaining the digital image.

The device 1 comprises a first plate 40 and a second plate 41, attached to one another and forming through channel 42. The detection module 20 is provided in the first plate 40 and the emission module 10 is provided in the second plate 41, but the reverse combination may also be envisaged. The observation zone 30 is located in the through channel 42. In particular, the second plate 41 has an outer plate 43 and a frame plate 44, attached to one another. Said frame plate 44 has a hole 45 for receiving the emission module 10 and a transparent cover 46 between said emission module 10 the through channel 42. In the first embodiment, the through channel 42 and the observation zone 30 have a volume of a size that allows the samples 31 to freely enter said observation zone 30. With the device 1 arranged in vertical, due to the gravitation, the sample 31 is generally arranged near to said emission module 10, in contact to the transparent cover 46.

The device 1 is also provided with control means, not shown in Fig. 3. Said control means is configured for driving the device 1 to execute a method for obtaining a digital image from a sample 31 arranged in the observation zone 30. The method comprises repeating the following steps:
a) Determining a plurality of target light emitters 12 among said light emitters 11 of said emission module 10, each target light emitter 12 spaced away from the other target light emitters 12.
b) Determining a plurality of target light detectors 12 among said plurality of light detectors 21 of said detection module 20.
c) Activating said target light emitters 12 and reading said target light detectors 22.
d) Determining a plurality of target pixels among said pixels of said digital image and obtaining each of said target pixels from said reading of said target light detectors 22.

An iteration of the method comprises said steps a) to d), so that after a plurality of iterations all the image pixels of said digital image are obtained, thus obtaining said microscopic digital image of said sample 31.

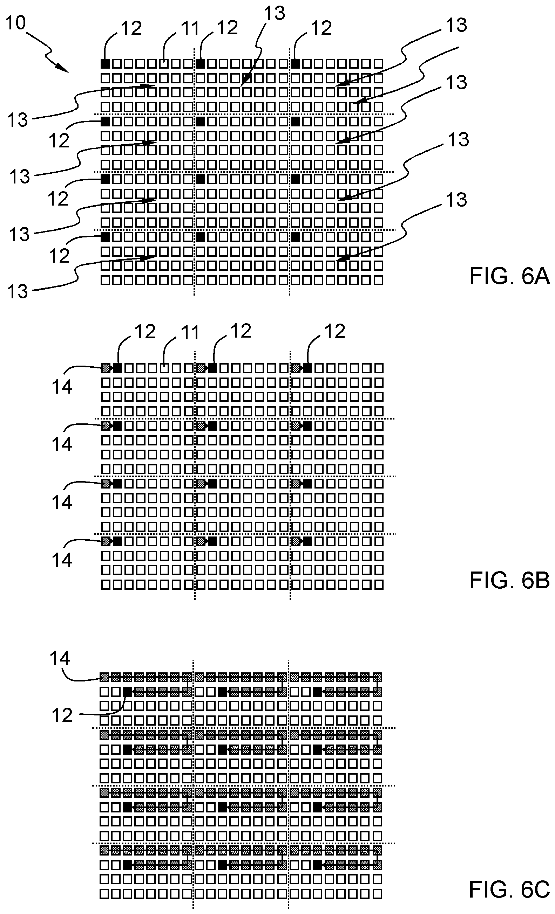

Fig.6A, 6B and 6C show the emission module 10 in different iterations of the method for the first embodiment. As it is shown in the figures, the emission module 10 is a rectangular array of MxN light emitters 11, so that said emission module 10 comprises M light emitters 11 in a first dimension and N light emitters 11 in a second dimension. For the sake of brevity and clarity, the first dimension will be referred as horizontal and the second dimension as vertical, in reference to the figures. The emission module 10 has a plurality of emission zones 13, each having a plurality of light emitters 11. In the figures, the boundaries between zones are marked with dashed lines. Each of the emission zones 13 is a rectangular group of mxn light emitters 11, thus, having PxQ emission zones 13, where M=m·P and N=n·Q. For the sake of clarity, the number of elements used in this example is very small. A skilled person will understand that a real implementation of the device 1 will have a much greater number of light emitters, for example, one million light emitters or more. In the case shown in the figures M is 24 and N is 16, thus forming a 384px detection module 20. Also, in the figures P=3, Q=4, m=8 and n=4.

As it can be seen, the target light emitters 12 are regularly spaced away each 8 elements horizontally and each 4 elementsvertically. In particular, each target light detector 22 is spaced away from its neighbour target light detectors 22 enough to avoid the interference of the light coming from the corresponding neighbour target light emitters 12, so that each target light detector 22 is only illuminated by its corresponding target light emitter 12 that is centred regarding said target light detector 22. As a reference, see the cone of light shown in Fig. 2.

In the figures 6A to 6C the target light emitters 12 of each iteration have been represented in black, and the already used light emitters 14 from previous iterations are shown in grey. The lines with arrows connecting the light emitters 11 show the evolution between different iterations. In particular, Fig. 6A shows the first iteration, and Fig. 6B the second iteration, while Fig. 6C shows the 14^{th} iteration. As it is shown, for the first iteration of the method the target light emitter 12 of each emission zone 13 is determined as one corner light emitter 11 of said emission zone 13, in this case, the one at the upper-left corner, identified by the coordinates (1, 1) inside the emission zone 13. Nevertheless, the equivalent results may be envisaged starting from the other corners (1, m), (m, 1) and (m, m). For any consecutive iteration of the method, the target light emitters 12 of each emission zone 13 are neighbours of the ones used in the previous iteration, in particular, following a zig-zag pattern between iterations as it can be seen in the figures.

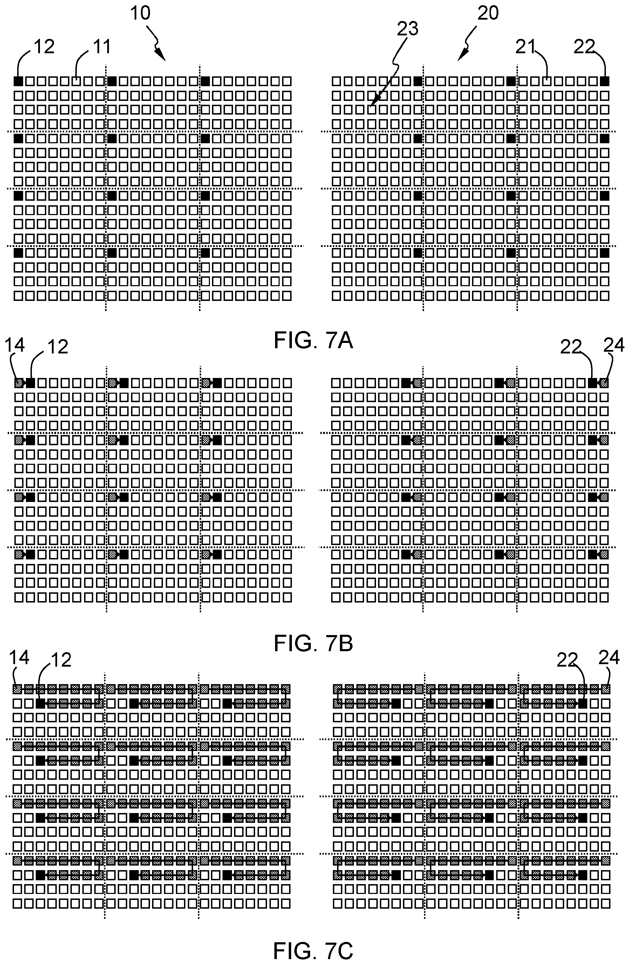

Fig. 7A to 7B show both the emission module 10 and the detection module 20 for the first embodiment where there is a one-to-one correspondence between light emitters 11 and light detectors 21. Notice that, since in this first embodiment, both are facing each other, the light detectors 21 corresponding to the light emitters 11 are symmetrical when represented in the figures. In this embodiment the detection module 20 is also divided in several detection zones 23, each having the same number of light detectors 21 as the number of light emitters, since there is a one-to-one correspondence between light emitters 11 and light detectors 21. Likewise, there is a one-to-one correspondence between the light detectors 21 and the pixels of the digital image, so that the number of light emitters 11 is the same that the number of light detectors 21 and that the number of pixels. The correspondence between elements further translates into a correspondence of zones which a number and a distribution that is the same for the emission module 10, detection module 20 and digital image, except for the symmetry described above. Therefore, the digital image is also effectively divided in a plurality of image zones; each image zone comprising a plurality of pixels.

As it is shown in the figures, for each iteration, the target light emitters 12 are determined as comprising one light emitter 11 of each of the emission zones 13; and the target light detectors 22 are determined as the light detectors 21 corresponding to the target light emitters 12. Since each pixel of said image corresponds one-to-one to one of the light detectors 22, each target pixel is determined as the pixel corresponding to the target light detector 22 of the corresponding detection zone 23 and obtained by reading the said target light detector 22. Given the one-to-one correspondence between light detectors 21 and light emitters 11, equivalent results may be envisaged where the target pixel is determined by its corresponding target light emitter 12.

In the first embodiment, the control means has a static predefined sequence stored in-chip by means of shift registers between the plurality of target light emitters 12 of consecutive iterations of the method, in particular, there is a shift register for each of the emission zones 13 of the emission module 10 that is configured to sequentially activate each of the light emitters 11 of said emission zone 13. This way, each of the target light emitters 12 in an iteration are activated sequentially in one-pixel intervals from each of the target light emitters 12 in the previous iteration.

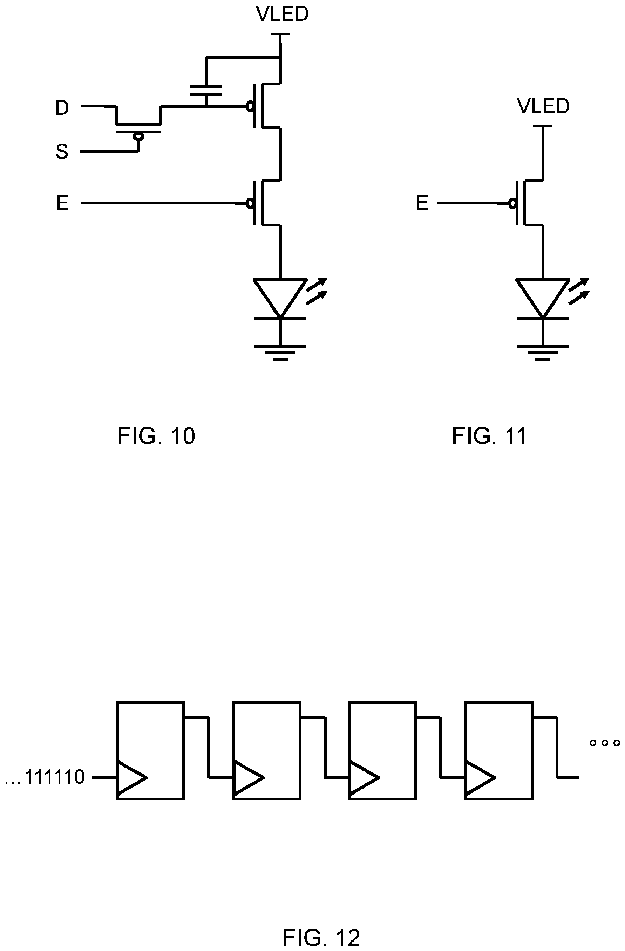

Fig. 10 shows a typical powering and activation circuit for a LED of a micro-display array using PMOS transistors. VLED is the voltage needed for activating the LED. The inputs are often named as data (D), select (S), and enable (E). The capacitor is used for prolonging the activation of the LED during a certain time. Fig. 11 shows the equivalent circuit in the case of the first embodiment of the device, which can be greatly simplified because the activation does not longer need to use capacitors. In this case, for each group of mxn light emitters 11, the shift register is configured to sequentially activate each of the mxn light emitters 11 of said group in one-pixel intervals, following the equivalent zig-zag path as in the case of the detection module 20. As it is shown in Fig. 12, the shift register is activated by a digital input. A zero value in the E input of Fig. 11 allows the passage of current through the PMOS transistor and activates the LED. In the next iteration the shift register transmits the zero value to the following flip-flop element and activates the following LED.

Other embodiments of the device according to the invention are disclosed hereinafter. These embodiments share most of the features disclosed in the first embodiment above. Therefore, only the differentiating features will be described in detail. For the sake of brevity, common features shared with the first embodiment disclosed above will not be described again hereinbelow.

In a second embodiment, the reading a target light detector 22 further includes averaging with the four neighbouring light detectors 21.

In a third embodiment, light concentration means, in particular micro-lenses, are arranged on top of each of said light detectors 21 for concentrating an incident light towards each respective light detector 21.

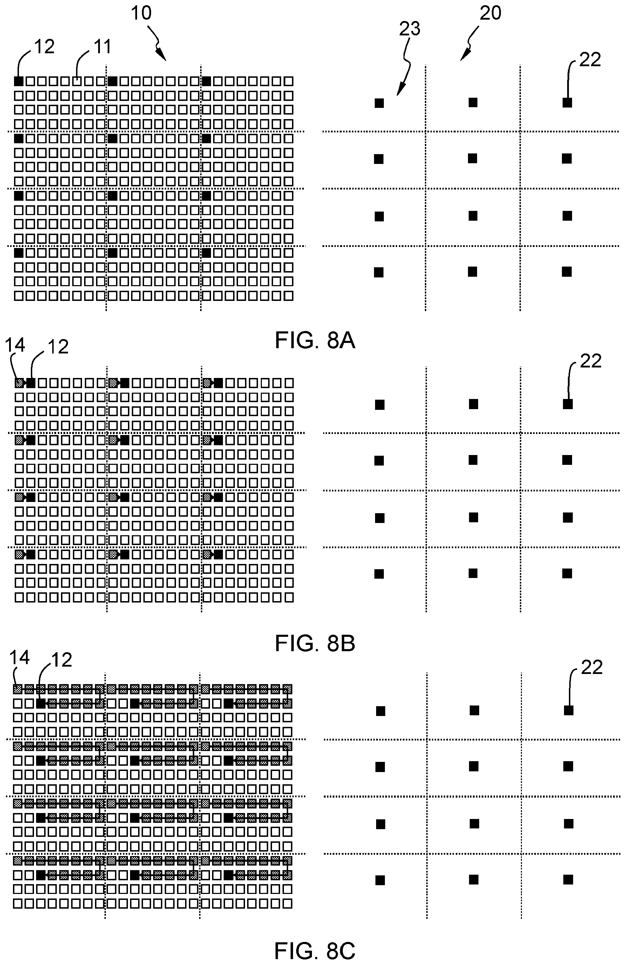

Fig. 8A, 8B and 8C show a fourth embodiment of the invention wherein each of the emission zones 13 has a plurality of light emitters 11 but the corresponding detection zone 23 only has one light detector 21, that is reused for all the iterations in the method. So that, the target light detectors 22 are determined as comprising the light detector 21 of each of said detection zones 23. There is a one-to-one correspondence between light emitters 11 and pixels. Therefore, for each iteration, the target pixels comprise one pixel of each of the image zones and is obtained by the reading of the corresponding detection zone 23, that is, the reading of the single target light detector 22 of said detection zone 23.

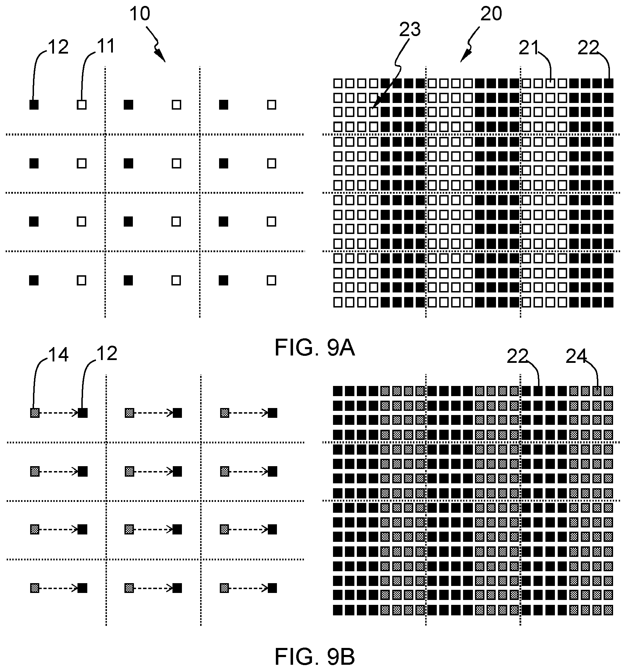

Fig. 9A and 9B show a fifth embodiment, wherein each of the emission zones 13 has fewer light emitters 11 than the corresponding detection zone 23. In the simplified figures, each emission zone 13 has two light emitters 11, so m=2 and n=1. As in the case of the first embodiment, each of the pixels of the digital image corresponds one-to-one to one of the light detectors 21, so that the number of pixels is the same that the number of light detectors 21. In this fifth embodiment, for each iteration of the method, several light detectors 22 are read in each detection zone 23. In particular, there is a one-to-many correspondence between the light emitters 11 and the light detectors 21, so that, for each iteration and each zone, a single target light emitter 12 is activated, but several target light detectors 22 are read into the corresponding pixels, thus obtaining a sub-image for each target light emitter 12. In a further embodiment derived from this fifth embodiment, each target pixel is obtained by further compensating the light fall-off received by the corresponding target detector 22.

In a sixth embodiment, the control means is software-driven instead of using an in-chip implementation using shift registers.

In a seventh embodiment, the device 1 also has a transporting tape having a self-adherent side and arranged through the observation zone 30 and the through channel 42. The transporting tape is configured for adhering the sample 31 thereto in the self-adherent side. The device further has dragging means, in particular a roller, that are configured for dragging said transporting tape though said observation zone 30, so that the sample 31 adhered thereto is dragged to the observation zone 30.

In an eight embodiment, the device 1 has suction means at one end of the through channel 42, configured for driving the sample 31 to said observation zone 30 by suction from the other end of the through channel 42.

In a ninth embodiment, the emission module 10 is not facing the detection module 20, instead, the detection module 20 is arranged under the emission module 10, which is transparent. This way, the detection module 10 is arranged to receive light from the observation zone 30 that has been reflected by the sample 31.

## Claims

1. Method for obtaining a microscopic digital image comprising a plurality of pixels, wherein said method makes use of:
- an observation zone (30), configured for receiving a sample (31);
- an emission module (10), comprising a plurality of light emitters (11) arranged to emit light towards said observation zone (30); and
- a detection module (20), comprising a plurality of light detectors (21) arranged to receive light from said observation zone (30);
**characterized in that** the method comprises arranging said sample (31) in said observation zone (30) and repeating the following steps:
a) determining a plurality of target light emitters (12) among said light emitters (11) of said emission module (10), each target light emitter (12) spaced away from the other target light emitters (12);
b) determining a plurality of target light detectors (22) among said plurality of light detectors (21) of said detection module (20);
c) activating said target light emitters (12) and reading said target light detectors (22); and
d) determining a plurality of target pixels among said pixels of said digital image and obtaining each of said target pixels from said reading of said target light detectors (22);
wherein an iteration of the method comprises said steps a) to d), so that after a plurality of iterations all the image pixels of said digital image are obtained, thus obtaining said microscopic digital image of said sample (31).

2. Method according to claim 1, wherein said sample (31) is arranged closer to said emission module (10) than to said detection module (20), preferably in contact to said emission module (10).

3. Method according to any of claims 1 or 2, **characterized in that** said detection module (10) is arranged to receive light from said observation zone (30) that has been reflected by said sample (31), preferably wherein said detection module (20) is arranged under said emission module (10) or beside said emission module (10), wherein said observation zone (30) is arranged over said emission module (10).

4. Method according to any of claims 1 or 2, **characterized in that** said observation zone (30) is arranged between said emission module (10) and said detection module (20).

5. Method according to any of claims 1 to 4, **characterized in that**:
- said emission module (10) comprises a plurality of emission zones (13), each emission zone (13) comprising a plurality of light emitters (11); and
- said detection module (20) comprises a plurality of detection zones (23), each detection zone (23) comprising at least one light detector (21),
- said digital image comprises a plurality of image zones; each image zone comprising a plurality of pixels;
each of said emission zones (13) corresponding one-to-one to one of said detection zones and one of said image zones, so that the number of emission zones (13) is the same that the number of detection zones (23) and that the number of image zones; wherein, for each iteration of the method:
- said plurality of target light emitters (12) is determined as comprising one light emitter (11) of each of said emission zones (13); and
- said plurality of target light detectors (22) is determined as comprising at least one light detector (21) of each of said detection zones (23) corresponding to each of said emission zones (13).

6. Method according to claim 5, **characterized in that**:
- each of said emission zones (13) comprises a plurality of light emitters (11);
- each of said detection zones (23) comprises one light detector (21); wherein, for each iteration of the method:
- said plurality of target light detectors (22) is determined as comprising the light detector (21) of each of said detection zones (23); and
- said plurality of target pixels comprises one pixel of each of said image zones; so that each of said target pixels corresponds to one of said image zones and, thus, to one of said emission zones and one of said detection zones;
wherein each pixel of said image corresponds one-to-one to one of said light emitters (12), so that each target pixel is determined as the pixel corresponding to the target light emitter (12) of the corresponding emission zone (13) and obtained by reading the corresponding target light detector (22) of the corresponding detection zone (23).

7. Method according to claim 5, **characterized in that**:
- each of said emission zones (13) comprises a plurality of light emitters (11);
- each of said detection zones (23) comprises a plurality of light detectors (21); and wherein each light emitter (11) corresponds one-to-one to one light detector (21) and one pixel, so that the number of light emitters (11) is the same that the number of light detectors (21) and that the number of pixels;
wherein, for each iteration of the method:
- said plurality of target light detectors (22) is determined as comprising the light detectors (21) corresponding to said target light emitters (12); and
- said plurality of target pixels is determined as comprising the pixels corresponding to said plurality of target light emitters (12) and said plurality of target light detectors (21) and each target pixel is obtained by reading the corresponding target light detectors (22).

8. Method according to claim 5, **characterized in that**:
- each of said emission zones (13) comprises a plurality of light emitters (11);
- each of said detection zones (23) comprises a plurality of light detectors (21); and
- each of said pixels of said image corresponds one-to-one to one of said light detectors (21), so that the number of pixels is the same that the number of light detectors (21);
wherein, for each iteration of the method:
- said plurality of target light detectors (22) is determined as comprising a plurality of light detectors (21) of each of said detection zones (23); and
- said plurality of target pixels is determined as comprising the pixels corresponding to said plurality of target light detectors (22) and each target pixel is obtained by reading the corresponding target light detector (22).

9. Method according to claim 8, **characterized in that** each target pixel is obtained by further compensating the light fall-off received by the corresponding target detector (22).

10. Method according to any of claims 5 to 9, **characterized in that**:
- said emission module (10) is a rectangular array of MxN light emitters (11), so that said emission module (10) comprises M light emitters (11) in a first dimension and N light emitters (11) in a second dimension;
- each of said emission zones (13) is a rectangular group of mxn light emitters (11), M being multiple of m and N being multiple of n; and
- thus, having PxQ emission zones (13), being M=m·P and N=n·Q;
wherein, for each of said emission zones (13):
- for the first iteration of the method said target light emitter (12) corresponding to said emission zone (13) is determined as one corner light emitter (11) of said emission zone (13); and
- for any consecutive iteration of the method, said target light emitter (12) corresponding to said emission zone (13) is a light emitter (11) of said emission zone (13) which is a neighbour of the target light emitter (12) determined in the previous iteration of the method; preferably, following a zig-zag pattern between iterations.

11. Device (1) for obtaining microscopic digital images, **characterized in that** it comprises:
- an observation zone (30) configured for receiving a sample (31);
- an emission module (10), comprising a plurality of light emitters (11) arranged to emit light towards said observation zone (30);
- a detection module (20), comprising a plurality of light detectors (21) arranged to receive light from said observation zone (30); and
- a control means, configured for driving the device (1) to execute the method for obtaining a microscopic digital image according to any of the claims 1 to 10.

12. Device (1) according to claim 11, **characterized in that** said control means comprise a static predefined sequence stored in-chip, preferably by means of shift registers between the plurality of target light emitters (12) of consecutive iterations of the method for obtaining a microscopic digital image, so that each of the target light emitters (12) in an iteration are activated sequentially from each of the target light emitters (12) in the previous iteration;
more preferably, wherein said emission module (10) comprises a plurality of emission zones (13), each emission zone (13) comprising a plurality of light emitters (11), and wherein said control means comprise a shift register for each of said emission zones (13) configured to sequentially activate each of the light emitters (11) of said emission zone (13).

13. Device (1) according to any of claims11 or 12, **characterized in that** it further comprises:
- a transporting tape, preferably having a self-adherent side, arranged through said observation zone (30); and configured for adhering said sample (31) thereto; and
- dragging means, configured for dragging said transporting tape though said observation zone (30), so that said sample (31) adhered thereto is dragged to said observation zone (30);
wherein said dragging means preferably comprise a roller.

14. Device (1) according to any of claims 11 or 12, **characterized in that** said it further comprises suction means, configured for driving said sample (31) to said observation zone (30) by suction.

15. Device (1) according to any of the claims 11 or 12, **characterized in that** said detection module (20) is arranged in parallel opposite to said emission module (10) and said observation zone (30) is arranged between said emission module (10) and said detection module (20); wherein, in said step (e) said corresponding plurality of target light emitters (12) of said emission module (10), is determined so that each target light emitter (12) is opposite and centred regarding a corresponding target light detector (22), preferably, wherein said device (1) comprises a first plate (40) and a second plate (41), attached to one another and forming through channel (42); wherein one of said emission module (10) and said detection module (20) is provided in said first plate (40) and the other of said emission module (10) and said detection module (20) is provided in said second plate (41), so that said observation zone (30) is located in said through channel (42).
